# EUROPEAN PATENT APPLICATION

(11) **EP 3 605 277 A1**
(43) Date of publication of application: **05.02.2020**
(21) Application number: 18772598.1
(22) Date of filing: 19.03.2018
(51) Int. Cl.: G06F 3/01

(54) **METHOD AND DEVICE FOR QUICKLY INSERTING RECOGNIZED WORD**

(30) Priority: 20.03.2017 CN 201710165750
(71) Applicant: Beijing Kingsoft Office Software, Inc., Beijing 100085 (CN); Zhuhai Kingsoft Office Software Co., Ltd, Zhuhai, Guangdong 519015 (CN); Guangzhou Kingsoft Mobile Technology Co., Ltd, Guangzhou, Guangdong 510000 (CN)
(72) Inventor: OU, Yuejian, Zhuhai Guangdong 519015 (CN); HUANG, Zhijun, Zhuhai Guangdong 519015 (CN); GAO, Yanping, Zhuhai Guangdong 519015 (CN)
(74) Representative: Liebetanz, Michael
(86) International application number: PCT/CN2018/079489
(87) International publication number: WO 2018/171560

(57) **Abstract**

Embodiments of the present application disclose a method and a device for quickly inserting a recognized word. The method comprises: opening a to-be-edited document, acquiring a picture acquisition instruction of a user, acquiring a picture containing a required word, recognizing the required word in the picture in first document editing software, and moving the required word into a to-be-edited document. By using the method provided by the embodiment of the present application, work efficiency can be improved.

## Description

The present application claims the priority of a Chinese patent application No. 201710165750.8, filed before the China National Intellectual Property Administration on March 20, 2017 and entitled "METHOD AND DEVICE FOR QUICKLY INSERTING RECOGNIZED WORD", which is incorporated herein by reference in its entity.

### TECHNICAL FIELD

The present application relates to the field of electronic document editing, in particular to a method and apparatus for quickly inserting the recognized word.

### BACKGROUND

When a user edits a document using document editing software in a terminal device such as a computer and a mobile phone, the user sometimes is intended to insert some non-replicable texts from an external carrier into the document, such as words in a picture, words in a video, words in a non-replicable electronic document and so on. In the prior art, the carrier is converted from a non-picture format into a picture format with format conversion software, then another existing picture recognition program is used to recognize words in the picture, and the recognized words are copied into a to-be-edited document.

It can be seen that, in the prior art, multiple software and programs are used to insert words in an external carrier into a to-be-edited document, and the words are manually copied into the to-be-edited document after being recognized, which leads to lower work efficiency.

In other solutions, if a user is intended to insert non-replicable words into a to-be-edited document, the user can add these non-replicable words into the document through manual typing, which leads to lower work efficiency.

### SUMMARY

The object of the embodiment of the present application is to provide a method and a device for quickly inserting a recognized word, so as to improve work efficiency. The specific technical solutions are as follows:
An embodiment of the present application discloses a method and a device for quickly inserting a recognized word. The method comprises:
opening a to-be-edited document;
acquiring a picture acquisition instruction from a user;
acquiring a picture containing a required word according to the picture acquisition instruction;
recognizing the required word in the picture in first document editing software;
moving the required word into the to-be-edited document.

Optionally, the picture acquisition instruction comprises:
an instruction to acquire a picture by screenshot.

Optionally, acquiring a picture containing a required word according to the picture acquisition instruction comprises:
acquiring a screenshot range according to the picture acquisition instruction when the picture acquisition instruction is an instruction to acquire a picture by screenshot, wherein the screenshot range contains the required word;
capturing a picture in the screenshot range.

Optionally, acquiring a screenshot range comprises:
acquiring a picture range selected by a mouse box as the screenshot range, or
acquiring a picture range selected by a trajectory box on a touch screen as the screenshot range.

Optionally, the picture acquisition instruction comprises:
an instruction to acquire a picture by a camera.

Optionally, acquiring a picture containing a required word according to the picture acquisition instruction from a user comprises:
activating the camera and confirming that a visible capturing area of the camera contains the required word when the picture acquisition instruction is an instruction to acquire a picture by a camera;
capturing a picture for the visible capturing area of the camera,

Optionally, moving the required word into the to-be-edited document comprises:
moving the required word into a to-be-edited document at a position to be inserted, wherein the position to be inserted is a position where a mouse cursor is located or a position where a cursor is located on a touch screen.

An embodiment of the present application further discloses an apparatus for quickly inserting a recognized word. The apparatus comprises:
an opening module configured for opening a to-be-edited document;
an instruction acquisition module configured for acquiring a picture acquisition instruction from a user;
a picture acquisition module configured for acquiring a picture containing a required word according to the picture acquisition instruction;
a recognition module configured for recognizing the required word in the picture in the first document editing software;
a word moving module configured for moving the required word into the to-be-edited document.

Optionally, the picture acquisition instruction comprises:
an instruction to acquire a picture by screenshot.

Optionally, the picture acquisition module comprises:
a screenshot range acquisition submodule configured for acquiring a screenshot range according to the picture acquisition instruction when the picture acquisition instruction is an instruction to acquire a picture by screenshot, wherein the screenshot range contains the required word;
a screenshot submodule configured for capturing a picture in the screenshot range.

Optionally, the screenshot range acquisition submodule is specifically configured for:
acquiring a picture range selected by a mouse box as the screenshot range, or
acquiring a picture range selected by a trajectory box on a touch screen as the screenshot range.

Optionally, the picture acquisition instruction comprises:
an instruction to acquire a picture by a camera.

Optionally, the picture acquisition module comprises:
a camera activation submodule configured for activating the camera and confirming that a visible capturing area of the camera contains the required word when the picture acquisition instruction is an instruction to acquire a picture by a camera;
a picture capturing submodule configured for capturing a picture for the visible capturing area of the camera.

Optionally, the word moving module is specifically configured for:
moving the required word into a to-be-edited document at a position to be inserted, wherein the position to be inserted is a position where a mouse cursor is located or a position where a cursor is located on a touch screen.

An embodiment of the present application further discloses an electronic device, which comprises a processor and a memory.

The memory is configured for storing a computer program;
The processor is configured for preforming any of the above method for quickly inserting a recognized word when executing the program stored on the memory.

An embodiment of the present application further discloses a computer readable storage medium, in which a computer program is stored. The computer program is configured for performing any of the above methods for quickly inserting a recognized word when executed by a processor.

An embodiment of the present application further discloses an executable program code which is operated to perform any of the above methods for quickly inserting a recognized word.

The method and device for quickly inserting a recognized word provided by the embodiment of the present application are applied when non-replicable required words need to be inserted from an external carrier. Wherein, a picture acquisition instruction of a user is acquired. A picture containing a required word according to the picture acquisition instruction is acquired. Then, the required word in the picture is recognized in the first document editing software. Finally, the required word is added into the to-be-edited document. In the embodiment of the present application, the picture containing the required word can be acquired when editing a document in the first document editing software, and the required word in the picture can be recognized and automatically inserted into the to-be-edited document. In the embodiment of the present application, a recognized word is automatically inserted merely using first document editing software, which improves work efficiency compared to the prior art in which multiple software and programs are needed and a required word is manually copied, or the prior art in which a recognized word is inserted through manual typing.

Of course, any product or method for implementing the present application will not necessarily have all the advantages mentioned above.

### BRIEF DESCRIPTION OF DRAWINGS

In order to describe the embodiments of the present application and the technical solutions in the prior art more clearly, drawings required for embodiments of the present application and the prior art will be described briefly below. It is obvious that the drawings below are for only some embodiments of the present application, and those skilled in the art can also obtain further drawings based on these drawings without any creative efforts.
Fig. 1 is a schematic flowchart of a method for quickly inserting a recognized word according to an embodiment of the present application.
Fig. 2 is a schematic diagram of a picture containing required words according to an embodiment of the present application.
Fig. 3 is a schematic flowchart of an example based on the method shown in Fig. 1.
Fig. 4 is a schematic flowchart of another example based on the method shown in Fig. 1.
Fig. 5 is a schematic structural diagram of a device for quickly inserting a recognized word according to an embodiment of the present application.
Fig. 6 is a schematic structural diagram of an example based on the device shown in Fig. 5.
Fig. 7 is a schematic structural diagram of another example based on the device shown in Fig. 5.
Fig. 8 is a schematic structural diagram of an electronic device according to an embodiment of the present application.

### DETAILED DESCRIPTION

In order to make the objections, technical solutions as well as advantages of the present application more apparent and understandable, the present application will be described in more detail below with reference to the appended drawings and embodiments. Obviously, the described embodiments are only some of the embodiments of the present application, rather than all of the embodiments. All other embodiments obtained based on the embodiments of the present application by those skilled in the art without any creative work fall into the protection scope defined by the present application.

An embodiment of the present application provides a method and apparatus for quickly inserting a recognized word, which can improve work efficiency.

The method according to an embodiment of the present application comprises: acquiring a picture acquisition instruction from a user, acquiring a picture containing a required word, recognizing the required word in the picture by using a first document editing software, and adding the required word into a to-be-edited document in the first document editing software. It can be seen that, in the embodiment of the present application, a recognized word is automatically inserted by only using a first document editing software, which improves work efficiency compared to the prior art in which multiple software and programs are used and the required word are required to be copied manually, or in which the recognized word is inserted through manual typing.

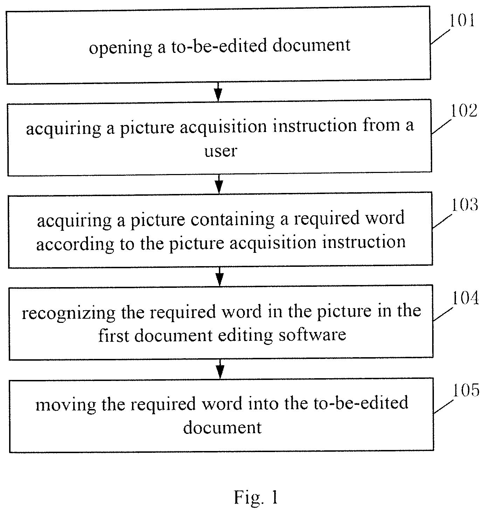

Fig. 1 a flowchart of a method for quickly inserting a recognized word according to an embodiment of the present application. The method comprises the following steps:
Step 101, opening a to-be-edited document.

The embodiment of the present application is performed by a processor of a terminal device. The terminal device comprises a computer, a mobile phone, a tablet, a device capable of editing an electronic document, and the like.

In the embodiment of the present application, if no document is opened, a document can be opened by a first document editing software as a to-be-edited document. Otherwise, step 101 is not performed.

The first document editing software is installed in a terminal device for editing electronic documents, such as WPS Office. All of the steps in the embodiment of the present application can be implemented in the first document editing software. Alternatively, steps 102-103 can also be implemented by other software.

The first document editing software in the embodiment of the present application may comprise a screenshot function and a picture recognition function. For example, the first document editing software can be integrated with a screenshot program, through which an image in a selected area can be captured. The first document editing software can be further integrated with a picture recognition program, through which the word in a picture can be recognized.

Step 102, acquiring a picture acquisition instruction from a user.

In the embodiment of the present application, a variety of ways to acquire pictures can be provided, such as acquiring pictures by screenshots or by cameras or the like. In this case, the picture acquisition instruction is an instruction that indicates one of the ways of acquiring pictures selected by the user. In other words, if an instruction that indicates one of the ways of acquiring pictures selected by the user is received, it means that a picture acquisition instruction is acquired from the user. In an embodiment of the present application, a user selection window can be pre-established in the first document editing software. In the user selection window, a variety of options for the ways of acquiring pictures are provided for the user to select, and then a user's click operation on the options for the ways of acquiring pictures is acquired.

It is to be noted that, steps 101 and 102 in the embodiment of the present application may be performed in no particular order. That is to say, in an embodiment of the present application, opening a to-be-edited document can be performed before acquiring a picture acquisition instruction from a user by using a first document editing software, which normally applies for a scenario where it is required to edit a to-be-edited document at first and then acquire a required word. Alternatively, opening a to-be-edited document can be performed after acquiring a picture acquisition instruction from a user by using a first document editing software, which normally applies for a scenario where a carrier of a required word is known and it is required to acquire a required word at first. In this scenario, multiple to-be-edited documents can be opened to insert the required word into multiple to-be-edited documents. The order of steps 101 and 102 in the embodiment of the present application are determined according to user's usage habits or specific usage scenarios.

Step 103, acquiring a picture containing a required word according to the picture acquisition instruction.

The picture acquisition instruction in the embodiment of the present application is related to the carrier where the required word is located. The required word is a word that the user actually intends to insert into a to-be-edited document. For example, the required word may exist in an existing electronic carrier, such as a picture, a video, non-replicable electronic document, and so on. In this case, the picture acquisition instruction can be an instruction for acquiring a picture by screenshot.

Assuming that an instruction for acquiring a picture by screenshot is received from the user and that an electronic carrier containing a required word is currently displayed on a screen of a terminal device, a screenshot range can be determined according to the instruction, and a picture containing the required word can be captured from the currently displayed electronic carrier according to the screenshot range.

In some cases, the required word may also exist in an existing physical carrier external to the terminal device, such as a word in a paper book, a word in a wall poster, a word on a TV screen, etc.. In this case, the image acquisition instruction can be an instruction for acquiring a picture by a camera. A camera is used to capture a picture of an physical carrier where a required word is located according to the instruction for acquiring a picture by a camera, so as to acquire a picture containing the required word.

Thus, a picture containing a required word can be acquired from a wide range of sources in the embodiment of the present application, which can be more universally used.

Step 104, recognizing the required word in the picture in the first document editing software.

For example, the required word in the picture can be recognized by using a picture recognition program integrated in the first document editing software. In an embodiment of the present application, program interfaces can be provided in the first document editing software in advance to facilitate the interchangeable usage of multiple picture recognition programs.

Step 105, moving the required word into the to-be-edited document.

The step 105 may include adding the required word into the to-be-edited document in the first document editing software.

In an embodiment of the present application, the recognized word can be added into the to-be-edited document at a preset fixed position, a random position, or a insertion position set by the user.

The word addition can be performed simultaneously with the picture recognition. That is to say, one word will be added into the to-be-edited document once it is recognized. This is helpful for a user to use or edit the recognized word as soon as possible. Alternatively, in an embodiment of the present application, the words are added as a whole after all the words are recognized. This is helpful to maintain the integrity of the required words, and is more suitable for a situation of using or editing the whole content of the required words.

Various ways to add a word from a picture into a to-be-edited document can be provided, such as by sliding, scrolling, jumping and the like, which is not limited in the embodiment of the present application. In the embodiment of the present application, a word in a picture can be added into a to-be-edited document in various specific ways such that the recognized word in the picture can be automatically inserted into the to-be-edited document, without any moving operation, such as manually copy, paste, drag and the like.

Therefore, in the embodiment of the present application, the manual copying of a recognized word into a to-be-edited document can be avoided, which enables automatic insertion and improves work efficiency.

It can be seen that an embodiment of the present application provides a method for quickly inserting a recognized word. In this method, a picture acquisition instruction is acquired from a user. A picture containing the required word is acquired according to the picture acquisition instruction. The required word in the picture is recognized in the first document editing software. The required word is added into the to-be-edited document. In the embodiment of the present application, the picture containing the required word can be acquired when editing a document in the first document editing software, and the required word in the picture can be recognized and moved into the to-be-edited document, which enables to recognize the required word in the picture and automatically insert it into the to-be-edited document. In the embodiment of the present application, a recognized word is automatically inserted by only using a first document editing software, which improves work efficiency compared to the prior art in which multiple software and programs are needed and a required word is manually copied, or the prior art in which a recognized word is inserted through manual typing.

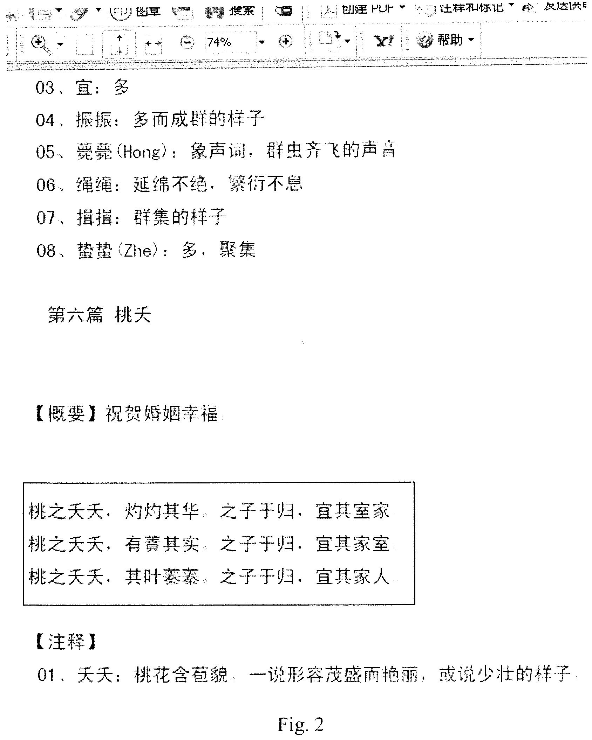

The implementation process of the embodiment of the present application is illustrated below through examples. Fig. 2 is a picture containing a required word. Specifically, when a user reads a PDF (Portable Document Format) document while editing a document by using document editing software, the user finds that some words are required words (referring to the words in the box in Fig. 2), and intends to insert the required words into the to-be-edited document. In the prior art, it is necessary for the user to use one external format conversion program or software to convert the PDF document into a picture format (i.e., the picture shown in Fig. 2), and then use another picture recognition program or software to recognize all the words in this picture, and manually copy and paste the required words in the box into the to-be-edited document. This process needs to open document editing software, format conversion software or program, and picture recognition software or program. After recognizing all the words in the picture, the user needs to manually select and copy the required word, which lead to lower work efficiency. If other solutions in the prior art are adopted, the user is required to type manually to acquire the required words in the box, which leads to lower work efficiency.

With the method of the embodiment of the present application, a picture acquisition instruction can be acquired from the user when editing a document by using the first document editing software. For example, a plurality of options can be provided to the user in the first document editing software, and these options can correspond to various picture acquisition methods, such as acquiring pictures by screenshot or by using a camera, or the like. The picture acquisition method selected by the user is determined based on the user's click operation on the plurality of options, and the picture containing the required words is acquired according to the picture acquisition method selected by the user.

With continuous reference to Fig. 2, in a way of acquiring a picture by screenshot, a picture of the box portion in the PDF document is acquired by using a screenshot program integrated in the first document editing software. For example, if the user uses a mouse to select words in the box of Fig. 2, a screenshot range is determined to include the box portion according to the user's operation. A picture containing the words in the box portion in Fig. 2 is acquired by screenshot according to this screenshot range. Then, the required words in this picture are recognized by using a picture recognition program integrated in the first document editing software, that is, the words in the box are recognized. Finally, the required words are added into the to-be-edited document. In the embodiment of the present application, the whole process is completed by only using the first document editing software, and the words in the picture are automatically recognized and inserted, which can improve work efficiency.

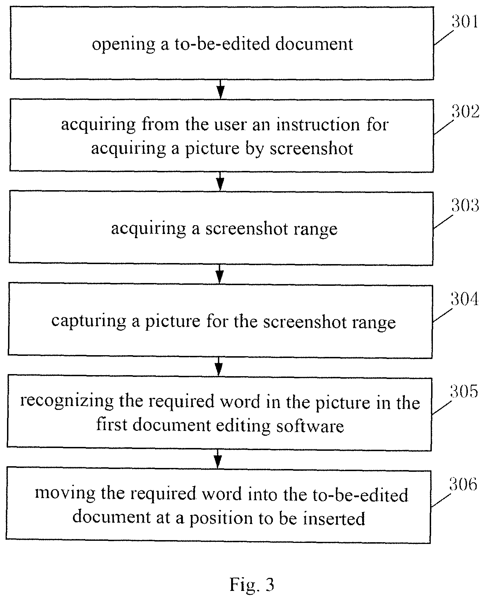

Fig. 3 is a flow chart of an example of a method shown in Fig. 1. The method comprises the following steps:
Step 301, opening a to-be-edited document.

In the embodiment of the present application, if no document is opened, a document can be opened by a first document editing software as a to-be-edited document. Otherwise, step 301 is not performed.

In the embodiment of the present application, the first document editing software is used to open a to-be-edited document. Specifically, the terminal device receives from a user an instruction to open a document, such as the user's click operation on the icon of the first document editing software, the user's click operation on the icon of the to-be-edited document, the user's voice operation instructions. The processor of the terminal device opens a to-be-edited document according to the instruction to open a document.

For example, according to an instruction to open a document that is the user's click operation on the icon of the first document editing software, the processor of the terminal device opens the first document editing software, and then receives an instruction for the user to select a document. For example, after acquiring the user's selection for a document, and the document is opened as a to-be-edited document.

For example, according to an instruction to open a document that is the user's click operation on the icon of a to-be-edited document, the processor of the terminal device opens the to-be-edited document by using the first document editing software, and the like.
For example, according to an instruction to open a document that is the user's voice operation instruction, if the user's voice operation instruction is to open a document with a name of "file 1", the processor of the terminal device finds the document with the name "file 1", and uses the first document editing software to open this document as the to-be-edited document, and the like.

In the embodiments of the present application, various ways to open a to-be-edited document can be provided, which can be combined with each other and are not illustrated here.

Step 302, acquiring from the user an instruction for acquiring a picture by screenshot.

In an embodiment of the present application, an option can be provided to the user in a user selection window preset in the first document editing software, so that the user can select to acquire a picture by screenshot. When it is detected a user's click operation on the option, it can be considered that a user's picture acquisition instruction is acquired. This option can be located in the option window in the toolbar of the first document editing software or in a user dialogue window outside the toolbar of the first document editing software.

It should be noted that steps 301 and 302 in the embodiment of the present application may be performed in no particular order. That is to say, in an embodiment of the present application, opening a to-be-edited document can be performed by using the first document editing software before acquiring a user's picture acquisition instruction by screenshot. Alternatively, opening a to-be-edited document can be performed after acquiring a user's picture acquisition instruction by screenshot using the first document editing software. The order of these two steps are determined according to user's usage habits or specific usage scenarios.

Step 303, acquiring a screenshot range.

The screenshot range can be determined according to the picture acquisition instruction in step 303.

In an embodiment of the present application, the method corresponding to the type of the terminal device is used for acquiring a screenshot range. For example, in case of a terminal device using a mouse, the picture range selected by the mouse box is acquired as the screenshot range, i.e., the range of screenshot. For example, in common terminal devices, a mouse is used in a desktop computer. For a desktop computer using a mouse, the picture range selected by the mouse box is acquired as the screenshot range, i.e., the range of screenshot. The screenshot range contains the required word. The picture range selected by the mouse box can be a trajectory area formed by arbitrary dragging of the mouse on the electronic carrier containing the required word. This range can be rectangular, circular or arbitrary irregular shape, etc. Taking Fig. 2 as an example, a rectangular area (i.e., a rectangular box in Fig. 2) formed by the mouse's continuous click-and-drag operation on the PDF document can be acquired as the screenshot range, i.e., the range of screenshot.

In an embodiment of the present application, the shape of the mouse box can also be preset as for example rectangle. That is to say, when a user drags the mouse, rectangular boxes of different sizes will appear. The user is only required to adjust and select the size of the rectangular box such that the required word can be contained in the box. This makes it easy to unify the criteria of the screenshot range because the screenshot can be more easily and efficiently performed when the box is in a regular form. In an embodiment of the present application, the thickness and color of the mouse box can also be preset. The thickness and color of the mouse box can be selected according to the user's usage habits or the background color of the electronic carrier, so as to be easily perceivable and easy to observe, which is convenient for the user to use. Of course, the embodiment of the present application can also provide a confirmation process after acquiring the picture range selected by the mouse box. For example, a user dialog window can be provided to prompt the user to confirm, so as to avoid the user's misoperation.

Alternatively, in case of a terminal device using a touch screen, a picture range selected by the trajectory box on the touch screen is acquired as the screenshot range, i.e., the range of screenshot. For example, for a commonly used touch-screen mobile phone, the picture range selected by the user by means of the trajectory box on the touch screen is acquired as the screenshot range. The screenshot range contains the required word. The picture range selected by the trajectory box on the touch screen can be a trajectory area formed by arbitrary touch and dragging of a finger or another tool on the electronic carrier containing the required word. This range can be rectangular, circular or arbitrary irregular shape, etc. Taking Fig. 2 as an example, a rectangular area (e.g., a rectangular box in Fig. 2) formed by the user finger's continuous touching-and-dragging operation on the PDF document can be acquired as the screenshot range. Of course, the picture range selected by the trajectory box on the touch screen is generally not in a regular shape, but in an embodiment of the present application, the shape of trajectory box on the touch screen can also be preset as a regular shape, such as a rectangle, a circle. That is to say, the acquired irregular trajectory box selected by the user will be transformed into a regular shape which matches with the irregular trajectory box best. For example, the shape of a user's trajectory box on the touch screen is irregular, a box of a preset regular shape (e.g., a rectangle) which contains the required word is found based on the required word contained in the user's trajectory box. This makes it easy to unify the criteria of the screenshot range because the screenshot can be more easily and efficiently performed when the trajectory box is in a regular form. In an embodiment of the present application, the thickness and color of the trajectory box on the touch screen can also be preset. The thickness and color of the trajectory box on the touch screen can be selected according to the user's usage habits or the background color of the electronic carrier so as to be easily perceivable and easy to observe, which is convenient for the user to use. Of course, the embodiment of the present application can also provide a confirmation process after acquiring the picture range selected by the trajectory box on the touch screen. For example, a user dialog window can be provided to prompt the user to confirm, so as to avoid the user's misoperation.

In an embodiment of the present application, a picture of a whole screen can be taken by full-screen screenshot without the selection of the screenshot range, which is often applicable to a scenario where all the words in the whole picture need to be recognized as required words. In an embodiment of the present application, a corresponding full-screen screenshot mode can be set for a terminal device using a mouse or a touch screen, such as shortcut keys of full-screen screenshot for mobile phones, etc.

Of course, there are many other terminal devices using mice or touch screens in practice, and the corresponding methods of acquiring a screenshot range are not described in detail.

In an embodiment of the present application, the screenshot range can be acquired directly for an existing electronic carrier containing a required word in a terminal device loaded with the first document editing software, or for an electronic carrier that is obtained from a terminal device external to the terminal device loaded with the first document editing software by means of Bluetooth transmission, Internet and other means. Alternatively, a screenshot can be performed directly on an electronic carrier containing a required word in a terminal device external to an electronic device loaded with the first document editing software by remote connection and control over the Internet, so as to acquire a picture containing a required word, and then the subsequent steps are carried out to recognize and move the required word into the to-be-edited document in the user terminal device at a position to be inserted.

In an embodiment of the present application, the screenshot range can be acquired for various electronic carriers containing required words from various sources, and it is applicable to various terminal devices using mice or touch screens. The method provided by the embodiment of the present application can be widely applied and is very practicable.

Step 304, capturing a picture for the screenshot range.

The step 304 may include capturing a picture containing a required word according to the screenshot range.

In an embodiment of the present application, a screenshot program in the first document editing software is used to capture a picture containing a required word based on the screenshot range determined in step 303. Of course, in an embodiment of the present application, a picture can be captured by full-screen screenshot.

Step 305, recognizing the required word in the picture in the first document editing software.

In an embodiment of the present application, a picture recognition program in the first document editing software is used to recognize the required word in the picture.

Step 306, moving the required word into the to-be-edited document at a position to be inserted.

In step 306, the required word can be added into a to-be-edited document in the first document editing software at a position to be inserted.

For example, if the terminal device is a terminal device using a mouse, the acquired position to be inserted is a location of the mouse cursor. If the terminal device is a terminal device using a touch screen, the acquired position to be inserted is a location of the cursor on the touch screen.

An embodiment of the application can also provide a confirmation process. For example, a user dialog window can be provided to prompt the user to confirm the position to be inserted and the like, so as to avoid the user's misoperation. Then, the required word is moved into the to-be-edited document at the position to be inserted.

The specific ways to move words and add words from a picture to a to-be-edited document can be those described for step 105, and will not be repeatedly described here.

In an embodiment of the present application, the position to be inserted can be acquired after step 301. That is to say, after a to-be-edited document is opened in step 301, the position of a mouse cursor or the position of a cursor on the touch screen can be detected as the position to be inserted. Of course, an embodiment of the present application can also provide a confirmation process after detection. For example, a user dialog window can be provided to prompt the user to confirm the position to be inserted, so as to avoid the user's misoperation. Then, the required word is directly moved into the to-be-edited document at the position to be inserted in step 306.

It can be seen that an embodiment of the present application provides a method for quickly inserting a recognized word. In this method, a user's picture acquisition instruction by screenshot is acquired. A screenshot range is then acquired. Next, a picture in the screenshot range is captured. A required word in the picture is recognized in first document editing software. Lastly, the required word is added into a to-be-edited document at a position to be inserted. An embodiment of the present application is applicable to a variety of electronic carriers containing required words. When editing a document in first document editing software, a picture containing a required word can be acquired by screenshot. The required word in the picture can be recognized, and can be automatically inserted into a to-be-edited document at a position to be inserted. In the embodiment of the present application, a recognized word is automatically inserted into a to-be-edited document at a position to be inserted merely using first document editing software, which improves work efficiency compared to the prior art in which multiple software and programs are needed and a required word is manually copied, or the prior art in which a recognized word is inserted through manual typing.

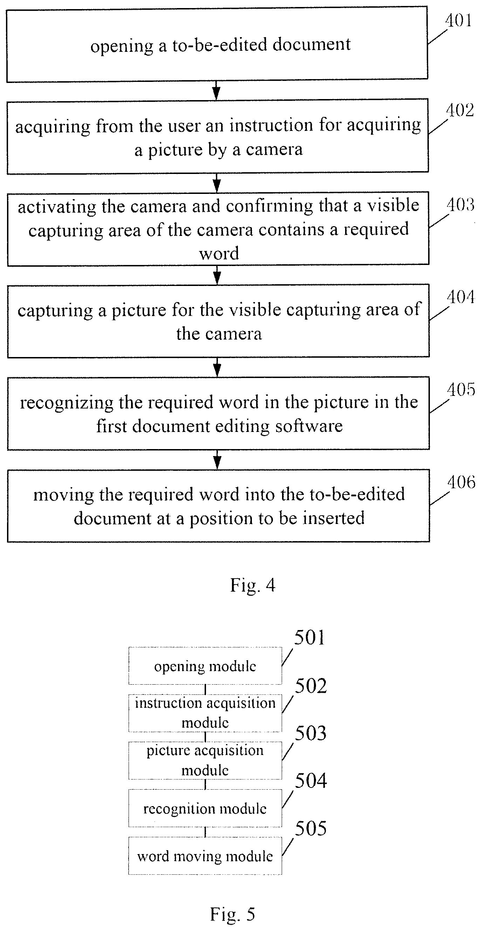

Fig. 4 is a flow chart of another example of a method shown in Fig. 1. The method comprises the following steps:
Step 401, opening a to-be-edited document.

In the embodiment of the present application, if no document is opened, a document may be opened by a first document editing software as a to-be-edited document. Otherwise, step 401 is not performed.

In the embodiment of the present application, the first document editing software is used to open a to-be-edited document. Specifically, the terminal device receives from a user an instruction to open a document, such as the user's click operation on the icon of the first document editing software, the user's click operation on the icon of the to-be-edited document, the user's voice operation instructions. The processor of the terminal device opens a to-be-edited document according to the instruction to open a document.

For example, according to an instruction to open a document that is the user's click operation on the icon of the first document editing software, the processor of the terminal device first opens the first document editing software, and then receives an instruction for the user to select a document, such as acquiring the user's click operation on a document, and lastly opens the document as a to-be-edited document.

For example, according to an instruction to open a document that is the user's click operation on the icon of a to-be-edited document, the processor of the terminal device opens the to-be-edited document by using the first document editing software.

For example, according to an instruction to open a document that is the user's voice operation instruction, e.g., to open a document with a name of "file 1", the processor of the terminal device finds the document with the name "file 1", and uses the first document editing software to open this document as the to-be-edited document.

In the embodiment of the present application, there can be various ways to open a to-be-edited document, which can be combined with each other and are not illustrated here.

Step 402, acquiring from the user an instruction for acquiring a picture by a camera.

In an embodiment of the present application, an option can be provided to the user in a user selection window preset in the first document editing software, so that the user can select to obtain a picture by a camera. When a user's click operation on the option is detected, it can be considered that a user's picture acquisition instruction is acquired. This option can be located in the option window in the toolbar of the first document editing software or in a user dialogue window outside the toolbar of the first document editing software.

It is to be noted that steps 401 and 402 in the embodiment of the present application may be performed in no particular order. That is to say, in the embodiment of the present application, opening a to-be-edited document can be performed by using the first document editing software before acquiring a user's picture acquisition instruction by a camera. Alternatively, opening a to-be-edited document can be performed after acquiring a user's picture acquisition instruction by a camera using the first document editing software. The order of these two steps are determined according to user's usage habits or specific usage scenarios.

Step 403, activating the camera and confirming that a visible capturing area of the camera contains a required word.

In steps 403 and 404, a picture containing the required word is captured by the camera.

The camera in an embodiment of the present application may be a camera of a terminal device loaded with first document editing software, such as a camera of a user's computer, a camera of a mobile phone, etc., or a camera external to a terminal device loaded with first document editing software, such as a camera of the other user's computer or mobile phone, and a camera of a traffic monitoring system, a camera of a monitoring device in a corridor, etc..

In an embodiment of the present application, a camera of a user terminal device can be activated. Alternatively, another camera connected with the user terminal device can be activated by using the Internet, LAN, Bluetooth, etc..

In an embodiment of the present application, it can be confirmed by the user that the visible capturing area of the camera contains the required word as clear as possible, so as to facilitate subsequent picture capturing. If the required word is contained within the visible capturing area of the camera, or the required word is not clear enough to meet picture capturing requirements, the user can adjust the physical carrier containing the required word, or the camera. For example, the position of a paper book printed with the required word within the visible capturing area of the camera can be manually adjusted, or the parameter of the camera can be adjusted. The parameter comprises the distance from a paper book, the capturing angle of a camera, and the focal length of a camera and so on, until the required word is contained within the visible capturing area of the camera, or the required word is clear enough to meet picture capturing requirements.

Alternatively, a terminal device loaded with the first document editing software can also determine whether a current capturing area of a camera contains the required word. If so, the camera is controlled to capture a picture in the current capturing area so as to acquire a picture containing the required word. Otherwise, the position of the camera is adjusted, and the process returns to the step of determining whether the required word is contained in the current capturing area of the camera.

That is to say, the camera can be adjusted by a terminal device loaded with the first document editing software, so that the camera can take a picture containing the required word.

Step 404, capturing a picture for the visible capturing area of the camera.

In an embodiment of the present application, a picture of the capturing area of the camera can be captured by the camera of the user terminal device, or by another external camera connecting to the user terminal device via the Internet, LAN, Bluetooth, etc.. For example, a monitoring camera in the corridor is connected to capture a picture of the visible capturing area of the camera and so on.

In an embodiment of the present application, a picture can be taken by a camera for a variety of physical carriers containing required words, such as paper books, wall posters, billboards, etc.. The method provided by the embodiment of the present application uses a variety of physical carriers as the carrier containing required words, which can be widely applied and is very practicable.

Step 405, recognizing the required word in the picture in the first document editing software.

In an embodiment of the present application, a picture recognition program in the first document editing software is used to recognize the required word in the picture.

Step 406, moving the required word into the to-be-edited document at a position to be inserted.

The step 406 may include adding the required word into a to-be-edited document in the first document editing software at a position to be inserted.

For example, if the terminal device is a terminal device using a mouse, the acquired position to be inserted is a location of the mouse cursor. If the terminal device is a terminal device using a touch screen, the acquired position to be inserted is a location of the cursor on the touch screen. An embodiment of the present application can also provide a confirmation process. For example, a user dialog window can be provided to prompt the user to confirm the position to be inserted and the like, so as to avoid the user's misoperation. The required word is moved into the to-be-edited document at the position to be inserted.

In an embodiment of the present application, the position to be inserted can be acquired after step 401. That is to say, after a to-be-edited document is opened in step 401, the position of a mouse cursor or the position of a cursor on the touch screen can be detected as the position to be inserted. Of course, an embodiment of the present application can also provide a confirmation process after detection. For example, a user dialog window can be provided to prompt the user to confirm the position to be inserted, so as to avoid the user's misoperation. Then, the required word is directly moved into the to-be-edited document at the position to be inserted in step 406.

It can be seen that a device for quickly inserting a recognized word according to an embodiment of the present application acquires a user's picture acquisition instruction by a camera. Then, a picture containing a required word is taken by the camera. A required word in the picture is recognized in first document editing software. Finally, the required word is added into a to-be-edited document at a position to be inserted. The embodiment of the present application is applicable to a variety of physical carriers containing required words. When editing a document in first document editing software, a picture containing a required word can be acquired by a camera. The required word in the picture can be recognized, and can be automatically inserted into a to-be-edited document at a position to be inserted. In the embodiment of the present application, a recognized word is automatically inserted into a to-be-edited document at a position to be inserted merely using first document editing software, which improves work efficiency compared to the prior art in which multiple software and programs are needed and a required word is manually copied, or the prior art in which a recognized word is inserted through manual typing.

Fig. 5 is a structural diagram of an apparatus for quickly inserting a recognized word according to an embodiment of the present application. The apparatus comprises:
an opening module 501 configured for opening a to-be-edited document;
an instruction acquisition module 502 configured for acquiring a picture acquisition instruction from a user;
a picture acquisition module 503 configured for acquiring a picture containing a required word according to the picture acquisition instruction;
a recognition module 504 configured for recognizing the required word in the picture in the first document editing software;
a word moving module 505 configured for moving the required word into the to-be-edited document.

The word moving module 505 is specifically configured for adding the required word into a to-be-edited document in the first document editing software.

It can be seen that the device for quickly inserting a recognized word provided by an embodiment of the present application firstly opens a to-be-edited document in first document editing software, then acquires a picture acquisition instruction of a user, acquires a picture containing the required word according to the picture acquisition instruction, and recognizes the required word in the picture in the first document editing software, and finally moves the required word into the to-be-edited document. In the embodiment of the present application, the picture containing the required word can be acquired when editing a document in the first document editing software, and the required word in the picture can be recognized and automatically inserted into the to-be-edited document. In the embodiment of the present application, a recognized word is automatically inserted merely using first document editing software, which is different from the prior art in which the opening of multiple software and programs and the manual copying of the required word are needed, or the prior art in which the recognized word are inserted through manual typing.

It should be noted that the device provided by the embodiment of the present application is a device applying the method for quickly inserting a recognized word described above, and all the embodiments of the method for quickly inserting a recognized word are applicable to this device and the achievable beneficial effects are the same or similar.

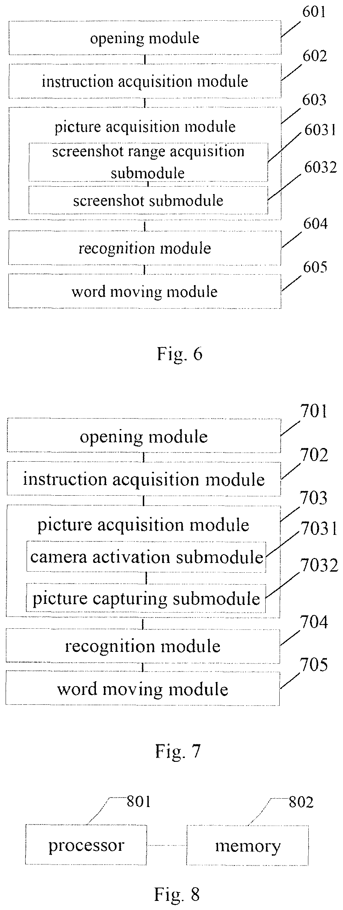

Fig. 6 is a preferred embodiment corresponding to the method shown in Fig. 3 based on Fig. 5. Fig. 6 is a structural diagram of an example based on the device shown in Fig. 5, which comprises:
In an embodiment of the present application, the picture acquisition instruction is an instruction to acquire a picture by screenshot;
In an embodiment of the present application, the picture acquisition module 603 comprises:
   a screenshot range acquisition submodule 6031 configured for determining a screenshot range according to the picture acquisition instruction;
   a screenshot submodule 6032 configured for capturing a picture containing a required word according to the screenshot range.

In an embodiment of the present application, the screenshot range acquisition submodule 6031 is specifically configured for:
acquiring a picture range selected by a mouse box as the screenshot range, or
acquiring a picture range selected by a trajectory box on a touch screen as the screenshot range.

In an embodiment of the present application, the word moving module 605 is specifically configured for:
moving the required word into a to-be-edited document at a position to be inserted, wherein the position to be inserted is a position where a mouse cursor is located or a position where a cursor is located on a touch screen.

It can be seen that the device for quickly inserting a recognized word provided by an embodiment of the present application firstly opens a to-be-edited document in first document editing software, then acquires a user's picture acquisition instruction by screenshot, acquires a screenshot range, captures a picture in the screenshot range, and recognizes the required word in the picture in the first document editing software, and finally moves the required word into the to-be-edited document. The embodiment of the present application is applicable to a variety of electronic carriers containing required words. When editing a document in first document editing software, a picture containing a required word can be acquired by screenshot. The required word in the picture can be recognized, and can be automatically inserted into a to-be-edited document at a position to be inserted. In the embodiment of the present application, a recognized word is automatically inserted into a to-be-edited document at a position to be inserted merely using first document editing software, which is different from the prior art in which multiple software and programs are needed and the manual selection of required words from the recognized words and the copying of the selected words into a to-be-edited document at positions to be inserted. Thus, work efficiency is improved.

Fig. 7 is a preferred embodiment corresponding to the method shown in Fig. 4 based on Fig. 5. Fig. 7 is a structural diagram of another example based on the device shown in Fig. 5, which comprises:
In an embodiment of the present application, the picture acquisition instruction is:
an instruction to acquire a picture by a camera.

In an embodiment of the present application, the picture acquisition module 703 is specifically configured for capturing a picture containing a required word by a camera.

In an embodiment of the present application, the picture acquisition module 703 is specifically configured for:
determining whether the required word is contained in a current capturing area of a camera;
if the required word is contained in the current capturing area of the camera, controlling the camera to capture a picture for the current capturing area so as to acquire a picture containing the required word;
if the required word is not contained in the current capturing area of the camera, adjusting the position of the camera, and returning to the step of determining whether the required word is contained in the current capturing area of the camera.

In an embodiment of the present application, the word moving module 705 is specifically configured for:
adding the required word into a to-be-edited document at a position to be inserted, wherein the position to be inserted is a position where a mouse cursor is located or a position where a cursor is located on a touch screen.

It can be seen that the device for quickly inserting a recognized word provided by an embodiment of the present application firstly opens a to-be-edited document in first document editing software, and then acquires a user's picture acquisition instruction by a camera, activates the camera and confirms that an capturing area of the camera contains a required word, takes a picture in the capturing area of the camera, and recognizes the required word in the picture in the first document editing software, and finally moves the required word into the to-be-edited document. The embodiment of the present application is applicable to a variety of physical carriers containing required words. When editing a document in first document editing software, a picture containing a required word can be acquired by a camera. The required word in the picture can be recognized, and can be automatically inserted into a to-be-edited document at a position to be inserted. In the embodiment of the present application, a recognized word is automatically inserted into a to-be-edited document at a position to be inserted merely using first document editing software, which is different from the prior art in which multiple software and programs are needed and the manual selection of required words from the recognized words and the copying of the selected words into a to-be-edited document at positions to be inserted. Thus, work efficiency is improved.

An embodiment of the present application also discloses an electronic device, as shown in Fig. 8, which comprises a processor 801 and a memory 802.

The memory 802 is configured for storing a computer program.

The processor 801 is configured for preforming any of the above methods for quickly inserting a recognized word when executing the program stored on the memory 802.

An embodiment of the present application further discloses a computer readable storage medium, in which a computer program is stored. The computer program is configured for performing any of the above methods for quickly inserting a recognized word when executed by a processor.

An embodiment of the present application further discloses an executable program code which is operated to perform any of the above methods for quickly inserting a recognized word.

It should be noted that the relationship terms herein such as "first", "second" and the like are only used to distinguish one entity or operation from another entity or operation, but do not necessarily require or imply that there is actual relationship or order between these entities or operations. Moreover, the terms "include", "comprise" or any variants thereof are intended to cover a non-exclusive inclusion, such that processes, methods, articles or devices comprising a series of elements comprise not only those elements listed, but also other elements not specifically listed or the elements intrinsic to these processes, methods, articles, or devices. Without further limitations, elements limited by the wording "comprise(s) a/an..." do not exclude that there are additional identical elements in the processes, methods, articles, or devices which comprise the listed elements.

All embodiments in the description are described in a correlated manner, and identical or similar parts in various embodiments can be referred to one another, the description for each embodiment all focuses on the differences with other embodiments. In particular, the description of the embodiments of the system as shown in Figs. 5 to 7, the electronic device as shown in Fig. 8, the computer readable storage medium described above, the executable program code described above is quite brief since these embodiments are essentially similar with the embodiments of the method for quickly inserting a recognized word as shown in Figs. 1 to 4, and reference can be made to the relevant parts in the description of the embodiments of the method for quickly inserting a recognized word.

The embodiments described above are just preferable embodiments of the present application, and not indented to limit the present application. Any modifications, alternatives, improvements or the like within the spirit and principle of the present application shall be comprised in the protection scope of the present application.

## Claims

1. A method for quickly inserting a recognized word, comprising:
acquiring a picture acquisition instruction from a user;
acquiring a picture containing a required word according to the picture acquisition instruction;
recognizing the required word in the picture in first document editing software; and
adding the required word into a to-be-edited document in the first document editing software.

2. The method of claim 1, wherein, the picture acquisition instruction is an instruction to acquire a picture by screenshot;
acquiring a picture containing a required word according to the picture acquisition instruction comprises:
determining a screenshot range according to the picture acquisition instruction;
capturing a picture containing a required word according to the screenshot range.

3. The method of claim 2, wherein, determining a screenshot range according to the picture acquisition instruction comprises:
acquiring a picture range selected by a mouse box as the screenshot range, or
acquiring a picture range selected by a trajectory box on a touch screen as the screenshot range.

4. The method of claim 1, wherein, the picture acquisition instruction is an instruction to acquire a picture by a camera;
acquiring a picture containing a required word according to the picture acquisition instruction comprises:
capturing a picture containing the required word by a camera.

5. The method of claim 4, wherein, capturing a picture containing the required word by a camera comprises:
determining whether the required word is contained in a current capturing area of the camera;
if the required word is contained in the current capturing area of the camera, controlling the camera to capture a picture for the current capturing area so as to acquire a picture containing the required word;
if the required word is not contained in the current capturing area of the camera, adjusting position of the camera, and returning to the step of determining whether the required word is contained in the current capturing area of the camera.

6. The method of claim 1, wherein, adding the required word into a to-be-edited document in the first document editing software comprises:
adding the required word into the to-be-edited document at a position to be inserted, wherein the position to be inserted is a position where a mouse cursor is located or a position where a cursor is located on a touch screen.

7. An apparatus for quickly inserting a recognized word, comprising:
an instruction acquisition module configured for acquiring a picture acquisition instruction from a user;
a picture acquisition module configured for acquiring a picture containing a required word according to the picture acquisition instruction;
a recognition module configured for recognizing the required word in the picture in the first document editing software; and
a word moving module for adding the required word into a to-be-edited document in the first document editing software.

8. The apparatus of claim 7, wherein the picture acquisition instruction is an instruction to acquire a picture by screenshot; the picture acquisition module comprises:
a screenshot range acquisition submodule configured for determining a screenshot range according to the picture acquisition instruction;
a screenshot submodule configured for capturing a picture containing a required word according to the screenshot range.

9. The apparatus of claim 8, wherein the screenshot range acquisition submodule is configured for:
acquiring a picture range selected by a mouse box as the screenshot range, or
acquiring a picture range selected by a trajectory box on a touch screen as the screenshot range.

10. The apparatus of claim 7, wherein the picture acquisition instruction is an instruction to acquire a picture by a camera;
the picture acquisition module is configured for capturing a picture containing the required word by a camera.

11. The apparatus of claim 10, wherein the picture acquisition module is configured for:
determining whether the required word is contained in a current capturing area of the camera;
if the required word is contained in the current capturing area of the camera, controlling the camera to take a picture for the current capturing area so as to acquire a picture containing the required word;
if the required word is not contained in the current capturing area of the camera, adjusting position of the camera, and returning to the step of determining whether the required word is contained in the current capturing area of the camera.

12. The apparatus of claim 7, wherein the word moving module is configured for:
adding the required word into the to-be-edited document at a position to be inserted, wherein the position to be inserted is a position where a mouse cursor is located or a position where a cursor is located on a touch screen.

13. An electronic device, comprising: a processor and a memory, wherein,
the memory is configured for storing a computer program;
the processor is configured for preforming the computer program stored on the memory to implement the method for quickly inserting a recognized word according to any one of claims 1 to 6 when executing the computer program.

14. A computer readable storage medium with a computer program stored thereon, wherein the computer program is configured for performing the method for quickly inserting a recognized word according to any one of claims 1 to 6 when executed by a processor.

15. An executable program code, which is configured for performing the method for quickly inserting a recognized word according to any one of claims 1 to 6.
